# EUROPÄISCHE PATENTSCHRIFT

(11) **EP 2 145 298 B1**
(45) Veröffentlichungstag und Bekanntmachung des Hinweises auf die Patenterteilung: **28.07.2010**
(21) Anmeldenummer: 08750204.3
(22) Anmeldetag: 08.05.2008
(51) Int. Cl.: G06Q 10/00

(54) **VERFAHREN UND EINRICHTUNG ZUM TRANSPORT VON GEGENSTÄNDEN ZU VERTEILPUNKTEN**
METHOD AND DEVICE FOR TRANSPORTING ITEMS TO DISTRIBUTION POINTS
PROCEDE ET DISPOSITIF DE TRANSPORT D'OBJETS VERS DES POINTS DE DISTRIBUTION

(30) Priorität: 09.05.2007 DE 102007021744
(43) Veröffentlichungstag der Anmeldung: 20.01.2010
(73) Patentinhaber: Siemens Aktiengesellschaft, 80333 München (DE)
(72) Erfinder: WILKE, Wolf-Stephan, 78467 Konstanz (DE)
(86) Internationale Anmeldenummer: PCT/EP2008/055710
(87) Internationale Veröffentlichungsnummer: WO 2008/138866

(56) Entgegenhaltungen:
- EP-A- 1 734 471
- WO-A-2006/065492
- WO-A-2007/024339
- KR-A- 20030 089 683
- US-A1- 2001 041 948
- US-A1- 2003 101 069
- US-A1- 2005 219 039
- US-A1- 2006 097 467

## Beschreibung

Die Erfindung betrifft ein Verfahren zum Transport von Gegenständen zu Verteilpunkten nach dem Oberbegriff des Anspruchs 1 und eine Einrichtung zum Steuern des Transports von Gegenständen zu Verteilpunkten nach dem Oberbegriff des Anspruchs 14.

Die Vorbereitung und Durchführung des Transportes von Gegenständen zu Verteilpunkten einer Verteilroute mit Hilfe eines Transportfahrzeuges, insbesondere bei der Sendungs-/Paketzustellung, ist heute mit hohem Aufwand verbunden. Typischerweise werden die Pakete auf Zusteller oder eine kleine Gruppe von Zustellern mittels Sortiermaschinen sortiert und dort manuell in Transportmittel (z.B. Rollgitterboxen) eingelagert. Nach dem Transport zu einem Zustelldepot, werden die Pakete dort aus dem Transportmittel wieder manuell entladen und von den Zustellern zustellgerecht in die Zustellfahrzeuge eingeladen. Dies erfolgt typischerweise so, dass eine gewisse Ordnung der Pakete im Zustellfahrzeug hergestellt wird, um den Zugriff auf die Pakete während der Zustellung zu erleichtern. Die Herstellung der Ordnung führt jedoch auch dazu, dass meist keine maximale Packungsdichte beim Beladen des Fahrzeugs erreicht werden kann.

Es erfolgen heute also mehrere manuelle, aufwendige Prozess-Schritte hintereinander.

Ein bekannter Ansatz, diesen Prozess zu verbessern, ist die Verwendung von beweglichen Regalmodulen, welche am Paketsorter beladen werden und dann direkt in das Zustellfahrzeug verbracht und dort befestigt werden (DE 10136124 C1). Die Entnahme der Pakete erfolgt dann während der Zustellung direkt aus den Regalmodulen.

In diesem Zusammenhang wurde in EP 1 298 552 B1 vorgeschlagen, nacheinander von jedem Paket die Kennung zu lesen und daraus oder durch zusätzliches Adresslesen die Zieladresse zu ermitteln und das Paket in eine definierte Position im Regal zu laden. Um hierbei Fehler zu vermeiden, erfolgt zusätzlich ein Lesen mittels Handlesers zur Verifikation. Das Entladen erfolgt dann in der Verteilreihenfolge auf der Verteilroute anhand einer Liste, in der die am jeweiligen Verteilpunkt zu entladenden Pakete und deren definierte Positionen im Regal aufgeführt sind. Die Pakete werden hierbei in der Reihenfolge des Lesens der Kennungen in das Regal automatisch oder manuell der Reihe nach nebeneinander in definierte Positionen geladen. Damit ist ein Optimieren des Beladens nach der Packungsdichte nicht möglich.

Eine solche Optimierung ist mit dem aus der DE 10149454 A1 offenbarten Verfahren möglich, bei dem die Position der Pakete in den Regelmodulen im Zustellfahrzeug automatischer erkannt wird, unabhängig von der Anordnung der Pakete im Zustellfahrzeug. Auf diese Weise kann der Zusteller alle Pakete im Fahrzeug schnell auffinden.

Ein Verfahren zum Erkennen von Positionen von Gegenständen in einem Regalmodul für ein Zustellfahrzeug ist aus der DE 102004051938 A1 bekannt. Das Regalmodul wird an einer Leseeinrichtung entlanggefahren, die die Position der Gegenstände im Regalmodul sowie den Zielort der Gegenstände erkennt.

Eine weitere Lösung ist von US 2001/041948 bekannt.

Der Erfindung liegt die Aufgabe zugrunde, ein Verfahren und eine Einrichtung zum Transport von Gegenständen zu Verteilpunkten einer Verteilroute mit Hilfe eines Zustellfahrzeuges mit Regalmodulen zur Aufnahme der mit maschinenlesbaren Kennungen versehenen Gegenstände bereitzustellen, wobei die Regalmodule außerhalb des Zustellfahrzeuges beladen und in das Zustellfahrzeug transportiert werden und dann in der Verteilreihenfolge entladen werden, mit denen aufwandsoptimiert die Packungsdichte in den Regalmodulen erhöht werden kann bei sicherer Identifizierung der zu entladenden Gegenstände.

Die Aufgabe wird durch ein Verfahren mit den Merkmalen des Anspruchs 1 und eine Einrichtung mit den Merkmalen des Anspruchs 14 gelöst.

Die Erfindung betrifft ein Verfahren und eine Einrichtung zum Transport von Gegenständen zu Verteilpunkten. Die Gegenstände werden mit Hilfe eines Zustellfahrzeugs mit Regalmodulen transportiert. Die Gegenstände sind mit maschinenlesbaren Kennungen versehen. Die Regalmodule werden außerhalb des Zustellfahrzeuges mit den Gegenständen beladen und dann im Zustellfahrzeug transportiert. Die Gegenstände werden relativ zu einer Leseeinrichtung bewegt. Die Leseeinrichtung liest hierbei automatisch die jeweilige Kennung eines an der Leseeinrichtung vorbeigeführten Gegenstands und ermittelt, in welcher Regalebene sich dieser Gegenstand befindet. Diese Angaben werden zwischengespeichert. Für jeden Verteilpunkt wird automatisch die Position jedes Gegenstands, der an diesem Verteilpunkt zu entladen ist, im Regalmodul in Abhängigkeit von
- der Reihenfolge des Lesens der Kennung und
- der ermittelten Regalebene, in der sich der Gegenstand befindet,
   ermittelt. Dann werden vorzugsweise die an den entsprechenden Verteilpunkten zu entladenden Gegenstände des jeweiligen Regalmoduls angezeigt.

Erfindungsgemäß werden die Kennungen der Gegenstände erst nach dem Beladen der Regalmodule durch Bewegen der Regalmodule relativ zu einer Leseeinrichtung ermittelt. Die Leseeinrichtung besitzt für jede Regalebene mindestens eine separate Erfassungsvorrichtung zum Lesen der Kennung des jeweils an ihr vorbei bewegten Gegenstandes. Dann erfolgt schnell und unkompliziert die Ermittlung der Position jedes Gegenstandes mit gelesener Kennung im jeweiligen Regalmodul in Abhängigkeit von der Reihenfolge des Lesens der Kennung und von der jeweiligen, die Kennung ermittelnden und der jeweiligen Regalebene zugeordneten Erfassungsvorrichtung/en. Die gelesenen Kennungen werden mit den zugehörigen Positionsangaben abgespeichert.

Vorteilhafte Ausgestaltungen der Erfindung sind in den Unteransprüchen dargestellt.

Vorzugsweise ist das mindestens eine Regalmodul verfahrbar, und die Leseeinrichtung ist als ortsfestes Gerät ausgestaltet.

So ist es vorteilhaft, wenn die Positionen der an den entsprechenden Verteilpunkten zu entladenden Gegenstände im jeweiligen Regalmodul angezeigt werden.

In der Erfindung sind die Kennungen in berührungslos auslesbaren Datenspeichern, insbesondere RFID-Tags, aufzuzeichnen, welche sich in oder an den Sendungen befinden. Um in diesem Zusammenhang Doppel- und Fehlerfassungen zu vermeiden, weist die Leseeinrichtung für jede Regalebene RFID-Antennen auf, die RFID-Signale nur eines Gegenstandes erfassen.

Damit eventuelle Überlagerungen der RFID-Signale in den RFID-Antennen vermieden werden, können diese gegeneinander abgeschirmt werden.

Um die Beeinflussung der Signale zwischen den Regalebenen zu minimieren ist es vorteilhaft, die Regalböden mit entsprechenden Abschirmungen zu versehen.

Zur Verbesserung der Identifizierung der zu entladenden Gegenstände durch den Zusteller ist es vorteilhaft, in vorherigen Prozessschritten aufgenommene Abbildungen und/oder ermittelte Abmessungen der Gegenstände zusammen mit den Kennungen diesen zugeordnet elektronisch abzuspeichern und mit den Gegenstandspositionen anzuzeigen.

Eine weitere Möglichkeit für eine Realisierung unter Verwendung der bisher üblichen optisch lesbaren Barcodes auf den Gegenständen besteht darin, dass die Erfassungsvorrichtungen als Barcodeleser ausgebildet sind und die Gegenstände in den Regalmodulen so ausgerichtet werden, dass die Barcodes den Barcodelesern zugewandt sind.

Möglich ist auch, ein Abbild des Gegenstands aufzunehmen. Durch eine bildverarbeitende Methode wird ein Merkmalsvektor für dieses Abbild generiert. Dieser Merkmalsvektor unterscheidet den Gegenstand von allen anderen Gegenständen und wird zwischengespeichert. Ein solches Verfahren ist z. B. aus DE 4000603 C2 bekannt. Um beim Entladen einen Gegenstand zu re-identifizieren, wird erneut ein Abbild erzeugt, ein Merkmalsvektor generiert und dieser neue Merkmalsvektor mit allen zwischengespeicherten Merkmalsvektoren verglichen. Derjenige zwischengespeicherte Merkmalsvektor, der dem neuen Vektor am ähnlichsten ist, stammt von demselben Gegenstand.

Vorteilhaft im Sinne einer Arbeitserleichterung für den Zusteller ist es auch, wenn die Anzeige der Positionen der am jeweiligen Verteilpunkt zu entladenden Gegenstände unter Verwendung eines GPS-Navigationsmoduls erfolgt, in welchem die Verteilroute gespeichert ist und welches die Anzeige bei Erreichen des jeweiligen Verteilpunktes aktiviert.

Bei der Ausgestaltung der Kennungen besteht die Möglichkeit, diese als Identifikations(ID)-Kennungen zu gestalten und die zugehörigen Zieladressangaben mit Hilfe einer Datei, in der diese den ID-Kennungen zugeordnet gespeichert sind, zu ermitteln. Weiterhin können die Kennungen auch die Zieladressangaben beinhalten.

Die Anzeige der zu entladenden Gegenstände kann mittels einer Anzeigeeinrichtung des Zustellfahrzeuges oder eines tragbaren Gerätes des Zustellers erfolgen.

Anschließend wird die Erfindung in einem Ausführungsbeispiel anhand der Zeichnung erläutert.

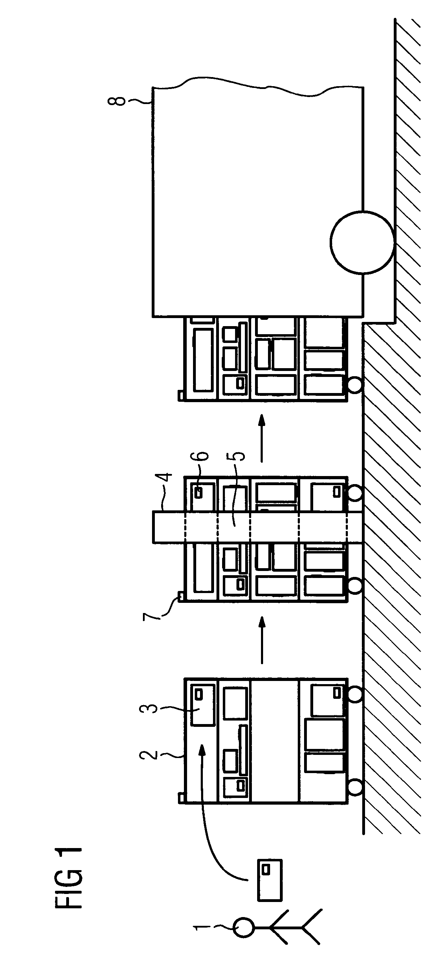

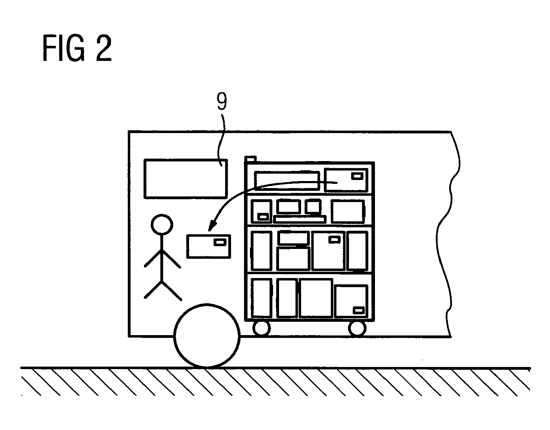

Dabei zeigen
FIG 1a eine schematische Darstellung des Beladens eines Zustellfahrzeuges
FIG 1b eine schematische Darstellung des Entladens eines Regalmoduls im Zustellfahrzeug

Eine maximale Packungsdichte in den Regalmodulen 2 kann durch eine ungeordnete (also zunächst nicht zustellgerechte) Beladung der Regalmodule 2 mit Gegenständen, in diesem Beispiel Pakete 3 als Sendungen, durch einen Bediener oder Zusteller 1 erzielt werden. Dies ist außerdem wesentlich prozessgerechter, da bei der Beladung der Regalmodule 2 an einem Paketsorter keinerlei Vorwissen über die Zustell-Route mit den Verteilpunkten oder die Paket-Ziele erforderlich ist.

Dieser Ablauf setzt voraus, dass die Pakete eindeutig identifizierbar sind. Dies geschieht in diesem Falle durch RFID-Tags 6 , kann aber auch durch andere Mittel wie Strichcodes/Barcodes sichergestellt werden, wobei dann jedoch beim Beladen der Regalmodule 2 auf korrekte Ausrichtung der Pakete zu achten ist, so dass die Barcodes auch gelesen werden können. RFID-Tags 6 bieten den Vorteil, dass das Beladen auch ohne Ausrichtung erfolgen kann, wie in der Figur dargestellt. Nach der ungeordneten Beladung der Regalmodule 2 mit den Paketen 3 für eine Zustell-Route werden die Regalmodule 2 einzeln an einer Leseeinrichtung 4 vorbeibewegt. Die Leseeinrichtung 4 ist so gestaltet, dass sie die Pakete 3 nach Regalebenen getrennt erfassen kann. Dies geschieht beispielsweise dadurch, dass je Ebene mindestens eine RFID-Antenne 5 angebracht wird, welche so abgeschirmt ist, dass sie nur die zugeordnete Ebene erfasst. Die Regalmodule 2 sind ebenfalls so ausgestaltet, dass eine Abschirmung der Ebenen untereinander gewährleistet ist. Dies geschieht beispielsweise dadurch, dass die Regalböden aus Kunststoff mit einer metallischen Einlage gefertigt sind. Dadurch wird auch sichergestellt, dass RFID-Tags 6, welche direkt auf einem Regalboden zu liegen kommen, einen gewissen Mindestabstand zur metallischen Abschirmung haben.

Damit ist bereits eine Zuordnung der einzelnen Pakete 3 auf eine bestimmte Regalebene möglich.

Durch das Vorbeibewegen der Regalmodule 2 an der Leseeinrichtung 4 wird weiter auch noch eine Zuordnung in Regallängsrichtung möglich. Die RFID-Tags 6 auf einer Ebene werden nämlich durch die Ausgestaltung der Abschirmung der RFID-Antenne 5 nicht alle gleichzeitig, sondern zeitlich nacheinander erfasst, d.h. in der Reihenfolge in Längsrichtung, in der sie im Regalmodul 2 liegen.

Vorteilhafterweise wird mit der Leseeinrichtung 4 auch noch die Kennung des Regalmoduls 2 durch Lesen eines an diesem angebrachten RFID-Tags 7 erfasst.

Es kann so mit geringem Aufwand (der Nutzungsgrad der installierten Leseeinrichtung 4 ist sehr hoch) eine PositionsBestimmung der Pakete 3 auf den Regalmodulen 2 durchgeführt werden. Die Positionsdaten der einzelnen Pakete 3 werden, vorteilhafterweise mit der Kennung des Regalmoduls 2, zusammen mit den Zieladressangaben der einzelnen Pakete 3 an das zugehörige Zustellfahrzeug (Transportfahrzeug) 8 übermittelt. Diese Übermittlung kann auch geschehen, indem die Positions- und Zieldaten der einzelnen Pakete 3 auf den am Regalmodul 2 angebrachten RFID-Tags 7 geschrieben werden. Dies kann gleich beim Lesevorgang geschehen. Diese Daten werden dann am Zustellfahrzeug 8, wenn die Regalmodule 2 in das Zustellfahrzeug 8 geschoben werden, wieder aus dem RFID-Tag 7 ausgelesen.

Im Zustellfahrzeug 8, entweder in einem Navigationsrechner des Zustellfahrzeuges 8 oder in einem tragbaren Gerät des Zustellers 1 ist die jeweilige Verteilroute mit den Verteilpunkten gespeichert. Bei der Eingabe der Kennungen der zu verteilenden Pakete 3 mit den zugeordneten Zieladressen werden dann die Pakete 3 den entsprechenden Verteilpunkten zugeordnet. Der Zusteller 1 gibt bei Erreichen eines bestimmten Verteilpunktes diesen in den Navigationsrechner ein und er erhält auf der Anzeige die zu entladenden Pakete 3 und deren Position im Fahrzeug. Bei Verwendung eines GPS-Gerätes erfolgt die Anzeige an jedem Verteilpunkt automatisch durch automatische Feststellung der Position des Zustellfahrzeuges 8 und damit auch des Verteilpunktes.

Ausführungsformen bei der Anzeige können beispielsweise sein:
- Graphische Darstellung,
- Darstellung von Buchstaben- und Nummernkennungen, welche sich an den Regalmodulen 2 befinden,
- bildhafte Darstellung der Pakete 3, z.B. durch Verwertung der vorher aufgenommenen Daten wie Länge, Breite, und durch Bildaufnahme der Paketoberfläche,
- Sprachausgabe.

Aufgrund der Angaben bei der Anzeige kann der Zusteller 1 schnell die Pakete 3 identifizieren und aus den Regalmodulen 2 entnehmen. Optional können durch eine am Zustellfahrzeug 8 vorhandene Leseeinrichtung die RFID-Tags 6 der entnommenen Pakete 3 zur Überprüfung / Protokollierung nochmals gelesen werden.

Die Anzeige der zu entladenden Pakete 3 kann sowohl wie dargestellt auf einem im Zustellfahrzeug 8 angebrachten Anzeigegerät 9, das mit dem Navigationsrechner des Zustellfahrzeuges 8 verbunden ist als auch auf dem Display des tragbaren Gerätes des Zustellers 1 erfolgen.

Zur besseren Identifikation der zu entladenden Pakete 3 können auch in vorherigen Prozessschritten ermittelte Daten zu den Paketen 3, wie Abbilder der Pakete 3 oder deren Abmessungen, zusätzlich dargestellt werden.

**Bezugszeichenliste**

| *Bezugszeichen* | *Bedeutung* |
|---|---|
| 1 | Zusteller |
| 2 | Regalmodul |
| 3 | zu transportierende Gegenstände, hier: Pakete |
| 4 | Leseeinrichtung |
| 5 | RFID-Antenne |
| 6 | RFID-Tags an den Paketen 3 |
| 7 | RFID-Tags an den Regalmodulen 2 |
| 8 | Transportfahrzeug |
| 9 | Anzeigevorrichtung |

## Patentansprüche

1. Verfahren zum Transport von Gegenständen (3), die mit maschinenlesbaren Kennungen versehen sind, zu vorgegebenen Verteilpunkten mit Hilfe eines Transportfahrzeuges (8),
wobei
- das Transportfahrzeug (8) mindestens ein Regalmodul (2) zur Aufnahme der Gegenstände (3) aufweist,
- das Regalmodul (2) mit den Gegenständen beladen wird,
- die Kennungen automatisch gelesen werden,
- das Transportfahrzeug (8) mit dem Regalmodul (2) die Verteilpunkte anfährt und
- unter Verwendung der gelesenen Kennungen ermittelt wird, welcher Gegenstand zu welchem Verteilpunkt zu transportieren und dort aus dem Transportfahrzeug (8) zu entladen ist,
wobei das Regalmodul (2) mehrere Ebenen zur Aufnahme der Gegenstände (3) aufweist,
das mit den Gegenständen (3) beladene Regalmodul (2) relativ zu einer Leseeinrichtung (4) bewegt wird,
die Leseeinrichtung (4) beim Bewegen der Gegenstände (3) automatisch
- die jeweilige Kennung eines an der Leseeinrichtung (4) vorbeigeführten Gegenstands liest und
- ermittelt, in welcher Regalebene sich dieser Gegenstand befindet,
**dadurch gekennzeichnet, dass** für jeden Verteilpunkt die Position jedes Gegenstands, der an diesem Verteilpunkt zu entladen ist, im Regalmodul (2) in Abhängigkeit von
- der Reihenfolge des Lesens der Kennung und
- der ermittelten Regalebene, in der sich der Gegenstand befindet,
automatisch ermittelt wird, und
die Position jedes Gegenstands im Regalmodul (2) von der Leseeinrichtung (4) auf einen am Regalmodul (2) angebrachten berührungslos auslesbaren Datenspeicher geschrieben wird und diese Daten am Transportfahrzeug (8) wieder aus dem Datenspeicher ausgelesen werden, wenn das Regalmodul (2) in das Transportfahrzeug (8) geschoben wird.

2. Verfahren nach Anspruch 1,
**dadurch gekennzeichnet, dass** die Positionen der an den jeweiligen Verteilpunkten zu entladenden Gegenstände (3) im Regalmodul (2) angezeigt werden.

3. Verfahren nach Anspruch 2,
**dadurch gekennzeichnet, dass** die Positionen auf einem tragbaren Gerät angezeigt werden.

4. Verfahren nach Anspruch 2 oder Anspruch 3,
**dadurch gekennzeichnet, dass**
- eine Abbildung und/oder Abmessung eines Gegenstands (3) und
- eine Zuordnung dieser Abbildung und/oder Abmessung zur Kennung dieses Gegenstands
elektronisch abgespeichert werden und
die Abbildung und/oder Abmessung gemeinsam mit der Position dieses Gegenstands im Regalmodul (2) angezeigt wird.

5. Verfahren nach einem der vorhergehenden Ansprüche,
**dadurch gekennzeichnet, dass** das mit den Gegenständen (3) beladene Regalmodul (2) **dadurch** relativ der Leseeinrichtung (4) bewegt wird, dass das Regalmodul (2) an der Leseeinrichtung (4) vorbei geführt wird.

6. Verfahren nach einem der vorhergehenden Ansprüche,
**dadurch gekennzeichnet, dass** die Leseeinrichtung (4) mehrere Erfassungseinheiten umfasst,
jede Erfassungseinheit jeweils einer Regalebene zugeordnet ist und
die Ermittlung, in welcher Regalebene sich ein Gegenstand befindet, den Schritt umfasst, dass festgestellt wird, welche Erfassungseinheit die Kennung dieses Gegenstands gelesen hat.

7. Verfahren nach einem der vorhergehenden Ansprüche,
**dadurch gekennzeichnet, dass** die Kennungen in Datenspeichern abgespeichert werden, die sich in oder an den Gegenständen (3) befinden, und die Leseeinrichtung (4) die Kennungen berührungslos ausliest.

8. Verfahren nach Anspruch 7,
**dadurch gekennzeichnet, dass** die Gegenstände (3) beim Beladen so ausgerichtet werden, dass die Leseeinrichtung (4) beim Bewegen der Gegenstände (3) die Datenspeicher auszulesen vermag.

9. Verfahren nach Anspruch 7 oder Anspruch 8,
**dadurch gekennzeichnet, dass** in jedem Datenspeicher eines Gegenstandes neben der Kennungen zusätzlich der Verteilpunkt, an dem dieser Gegenstand aus dem Transportfahrzeug (8) zu entladen ist, abgespeichert wird.

10. Verfahren nach einem der vorhergehenden Ansprüche,
**dadurch gekennzeichnet, dass** für jeden Gegenstand unter Verwendung der gelesenen Kennung dieses Gegenstands und unter Verwendung einer vorgegebenen rechnerverfügbaren Zuordnung dieser Kennung zu einem der Verteilpunkte automatisch ermittelt wird, an welchem Verteilpunkt dieser Gegenstand (3) zu entladen ist.

11. Verfahren nach einem der vorhergehenden Ansprüche,
**dadurch gekennzeichnet, dass** am jeweiligen Verteilpunkt das Entladen und/oder die Anzeige der Positionen der zu entladenden Gegenstände unter Verwendung eines GPS-Navigationsmoduls, in welchem eine Verteilroute mit den Verteilpunkten gespeichert ist, aktiviert wird.

12. Verfahren nach einem der vorhergehenden Ansprüche,
**dadurch gekennzeichnet, dass** die Gegenstände (3) unter Verwendung mehrerer Regalmodule (2) transportiert werden,
jedes Regalmodul (2) jeweils eine maschinenlesbare Regalmodul-Kennung (7) aufweist,
jedes Regalmodul (2) relativ zur Leseeinrichtung (4) bewegt wird und
die Leseeinrichtung (4) bei der Bewegung jedes Regalmoduls (2) zusätzlich die Regalmodul-Kennung (7) dieses Regalmoduls (2) liest und
für jeden Verteilpunkt und jeden Gegenstand, der am Verteilpunkt zu entladen ist, zusätzlich ermittelt wird, in welchem Regalmodul sich dieser Gegenstand befindet.

13. Verfahren nach einem der vorhergehenden Ansprüche,
**dadurch gekennzeichnet, dass** das oder die Regalmodule (2) außerhalb des Zustellfahrzeuges (8) beladen und dann in das Zustellfahrzeug (8) transportiert werden.

14. Einrichtung zum Steuern des Transports von Gegenständen (3), die mit maschinenlesbaren Kennungen versehen sind, zu vorgegebenen Verteilpunkten mit Hilfe eines Transportfahrzeuges (8),
wobei
- das Transportfahrzeug (8) mindestens ein Regalmodul (2) zur Aufnahme der Gegenstände (3) aufweist,
- die Einrichtung eine Leseeinrichtung (4) zum Lesen der Kennungen aufweist und
- die Einrichtung eine Ermittlungseinheit umfasst, die dazu ausgestaltet ist, unter Verwendung der gelesenen Kennungen zu ermitteln, welcher Gegenstand an welchem Verteilpunkt zu entladen ist,
wobei das Regalmodul (2) mehrere Ebenen zur Aufnahme der Gegenstände (3) aufweist,
die Leseeinrichtung (4) dazu ausgestaltet ist, bei einem Bewegen der Gegenstände (3) relativ zur Leseeinrichtung (4) automatisch
- die jeweilige Kennung eines an der Leseeinrichtung (4) vorbeigeführten Gegenstands zu lesen und
- zu ermitteln, in welcher Regalebene sich dieser Gegenstand befindet,
**dadurch gekennzeichnet, dass** die Ermittlungseinheit eine Auswerteeinheit umfasst, die dazu ausgestaltet ist,
für jeden Verteilpunkt die Position jedes Gegenstands, der an diesem Verteilpunkt zu entladen ist, im Regalmodul (2) in Abhängigkeit von
- der Reihenfolge des Lesens der Kennung und
- der ermittelten Regalebene, in der sich der Gegenstand befindet,
automatisch zu ermitteln,
und die Leseeinrichtung (4) dazu vorgesehen ist, die Position jedes Gegenstands im Regalmodul (2) auf einen am Regalmodul (2) angebrachten berührungslos auslesbaren Datenspeicher zu schreiben und das Transportfahrzeug (8) dazu vorgesehen ist, diese Daten wieder aus dem Datenspeicher auszulesen wenn das Regalmodul (2) in das Transportfahrzeug (8) geschoben wird.

15. Einrichtung nach Anspruch 14,
**dadurch gekennzeichnet, dass** die Einrichtung zusätzlich eine Anzeigevorrichtung (9) zur Anzeige der Positionen der an den entsprechenden Verteilpunkten zu entladenden Gegenstände (3) im Regalmodul (2) umfasst.

16. Einrichtung nach Anspruch 15,
**dadurch gekennzeichnet, dass** die Anzeigevorrichtung (9) als tragbares Gerät ausgestaltet ist.

17. Einrichtung nach Anspruch 15 oder Anspruch 16,
**dadurch gekennzeichnet, dass** die Einrichtung einen elektronischen Datenspeicher umfasst, in dem
- eine Abbildung und/oder Abmessung mindestens eines der Gegenstände (3) und
- eine Zuordnung dieser Abbildung und/oder Abmessung zur Kennung dieses Gegenstands
abgespeichert sind, und
die Anzeigevorrichtung (9) dazu ausgestaltet ist,
die Abbildung und/oder Abmessung gemeinsam mit der Position dieses Gegenstands im Regalmodul (2) anzuzeigen.

18. Einrichtung nach einem der Ansprüche 14 bis 17,
**dadurch gekennzeichnet, dass** die Kennungen in berührungslos auslesbaren Datenspeichern (6) abgespeichert sind
und die Datenspeicher sich in oder an den Gegenständen (3) befinden.

19. Einrichtung nach Anspruch 18,
**dadurch gekennzeichnet, dass** in jedem Datenspeicher (6) eines Gegenstandes neben der Kennungen zusätzlich der Verteilpunkt, an dem dieser Gegenstand aus dem Transportfahrzeug (8) zu entladen ist, abgespeichert ist.

20. Einrichtung nach Anspruch 18 oder Anspruch 19,
**dadurch gekennzeichnet, dass** mindestens ein berührungslos auslesbarer Datenspeicher als RFID-Tag (6) ausgebildet ist.

21. Einrichtung nach einem der Ansprüche 18 bis 20,
**dadurch gekennzeichnet, dass** mindestens ein berührungslos auslesbarer Datenspeicher eines Gegenstands als Strichcode ausgebildet ist,
der die Kennung des Gegenstands codiert und auf einer Oberfläche des Gegenstands angebracht ist, und
die Leseeinrichtung (4) dazu ausgestaltet ist, einen Strichcode zu lesen.

22. Einrichtung nach einem der Ansprüche 14 bis 21,
**dadurch gekennzeichnet, dass**
die Leseeinrichtung (4) als ortsfestes Gerät und das Regalmodul (2) als verfahrbares Gerät ausgestaltet ist.

23. Einrichtung nach einem der Ansprüche 14 bis 22,
**dadurch gekennzeichnet, dass**
die Leseeinrichtung (4) mehrere Erfassungseinheiten umfasst,
jede Erfassungseinheit jeweils einer Regalebene zugeordnet ist und
die Leseeinrichtung (4) dazu ausgestaltet ist, bei der Ermittlung, in welcher Regalebene sich ein Gegenstand befindet, festzustellen, welche Erfassungseinheit die Kennung dieses Gegenstands gelesen hat.

24. Einrichtung nach Anspruch 23,
**dadurch gekennzeichnet, dass**
jede Erfassungseinheit eine Sende- und Empfangseinheit umfasst und
jede Sende- und Empfangseinheit gegen die anderen Sende- und Empfangseinheiten dergestalt abgeschirmt ist, dass sie ausschließlich Kennungen von Gegenständen in der ihr zugeordneten Regalebene auszulesen vermag.

25. Einrichtung nach Anspruch 24,
**dadurch gekennzeichnet, dass**
jede Sende- und Empfangseinheit eine RFID-Antenne umfasst.

26. Einrichtung nach Anspruch 25,
**dadurch gekennzeichnet, dass**
jede Regalebene jeweils einen Regalboden aufweist und die Abschirmung der Sende- und Empfangseinheiten eine Abschirmung der Regalböden aufweist.

27. Einrichtung nach einem der Ansprüche 14 bis 26,
**dadurch gekennzeichnet, dass** die Ermittlungseinheit
- Lesezugriff auf einen Datenspeicher hat, in dem für jeden Gegenstand eine rechnerverfügbaren Zuordnung der Kennung dieses Gegenstands zu jeweils einem der Verteilpunkte abgespeichert ist, und
- dazu ausgestaltet ist, unter Verwendung der gelesenen Kennungen und der Zuordnungen zu ermitteln, welcher Gegenstand an welchem Verteilpunkt zu entladen ist.

28. Einrichtung nach einem der Ansprüche 14 bis 27,
**dadurch gekennzeichnet, dass**
die Einrichtung ein GPS-Navigationsmodul umfasst,
in welchem eine Verteilroute mit den Verteilpunkten gespeichert ist und
welches dazu ausgestaltet ist, bei Erreichen eines Verteilpunktes die Ermittlung und/oder Anzeige der Positionen der an diesem Verteilpunkt zu entladenden Gegenstände (3) zu aktivieren.

29. Einrichtung nach einem der Ansprüche 14 bis 28,
**dadurch gekennzeichnet, dass**
die Gegenstände (3) unter Verwendung mehrerer Regalmodule (2) transportiert werden,
jedes Regalmodul (2) jeweils eine maschinenlesbare Regalmodul-Kennung (7) aufweist,
die Leseeinrichtung (4) dazu ausgestaltet ist,
- bei einem Bewegen der Gegenstände (3) relativ zur Leseeinrichtung (4) zusätzlich automatisch die Regalmodul-Kennung (7) dieses Regalmoduls (2) zu lesen und
- für jeden Verteilpunkt und jeden Gegenstand, der am Verteilpunkt zu entladen ist, zusätzlich zu ermitteln, in welchem Regalmodul (2) sich dieser Gegenstand (3) befindet.

30. Einrichtung nach Anspruch 29,
**dadurch gekennzeichnet, dass** jede maschinenlesbare Regalmodul-Kennung eines Regalmoduls (2) in jeweils einem berührungslos auslesbaren Datenspeicher (7) abgespeichert ist.

## Claims

1. Method for transporting objects (3) that are provided with machine-readable ID codes to specified distribution points with the aid of a transport vehicle (8),
wherein
- the transport vehicle (8) has at least one rack module (2) for accommodating the objects (3),
- the rack module (2) is loaded with the objects,
- the ID codes are read automatically,
- the transport vehicle (8) containing the rack module (2) approaches the distribution points and
- it is determined, using the read ID codes, which object is to be transported to which distribution point and is to be unloaded there from the transport vehicle (8), wherein the rack module (2) has a plurality of levels for accommodating the objects (3),
the rack module (2) loaded with the objects (3) is moved relative to a reading device (4),
as the objects (3) are moved the reading device (4) automatically
- reads the respective ID code of an object being conducted past the reading device (4) and
- determines on which rack level said object is located, **characterised in that**
for each distribution point the position of each object that is to be unloaded at said distribution point is automatically determined in the rack module (2) as a function of
- the order in which the ID code is read and
- the determined rack level on which the object is located and
the position of each object in the rack module (2) is written by the reading device (4) to a contactlessly readable data memory mounted on the rack module (2) and said data is read from the data memory again on the transport vehicle (8) when the rack module (2) is pushed into the transport vehicle (8).

2. Method according to claim 1,
**characterised in that**
the positions of the objects (3) that are to be unloaded at the respective distribution points are displayed in the rack module (2).

3. Method according to claim 1,
**characterised in that**
the positions are displayed on a portable device.

4. Method according to claim 2 or claim 3,
**characterised in that**
- an image and/or a dimension of an object (3) and
- an assignment of said image and/or dimension to the ID code of said object
are stored electronically and
the image and/or dimension are displayed together with the position of said object in the rack module (2).

5. Method according to one of the preceding claims,
**characterised in that**
the rack module (2) loaded with the objects (3) is moved relative to the reading device (4) **in that** the rack module (2) is conducted past the reading device (4).

6. Method according to one of the preceding claims,
**characterised in that**
the reading device (4) comprises a plurality of detection units,
each detection unit is assigned to one rack level in each case and
determining on which rack level an object is located comprises the step of establishing which detection unit has read the ID code of said object.

7. Method according to one of the preceding claims,
**characterised in that**
the ID codes are stored in data memories that are located in or on the objects (3) and the reading device (4) reads the ID codes in a contactless manner.

8. Method according to claim 7,
**characterised in that**
during loading the objects (3) are aligned in such a way that the reading device (4) is able to read the data memories while the objects (3) are being moved.

9. Method according to claim 7 or claim 8,
**characterised in that**
also stored in each data memory of an object in addition to the ID codes is the distribution point at which said object is to be unloaded from the transport vehicle (8).

10. Method according to one of the preceding claims,
**characterised in that**
for each object it is automatically determined, using the ID code read for this object and using a specified computer-accessible assignment of said ID code to one of the distribution points, at which distribution point said object (3) is to be unloaded.

11. Method according to one of the preceding claims,
**characterised in that**
at the respective distribution point, the unloading and/or the display of the positions of the objects that are to be unloaded is activated using a GPS navigation module in which a distribution route containing the distribution points is stored.

12. Method according to one of the preceding claims,
**characterised in that**
the objects (3) are transported using a plurality of rack modules (2),
each rack module (2) has a machine-readable rack module ID code (7) in each case,
each rack module (2) is moved relative to the reading device (4) and
when each rack module (2) is moved the reading device (4) additionally reads the rack module ID code (7) of said rack module (2) and
for each distribution point and for each object that is to be unloaded at the distribution point it is additionally determined in which rack module said object is located.

13. Method according to one of the preceding claims,
**characterised in that**
the rack module or modules (2) are loaded outside the delivery vehicle (8) and then transported into the delivery vehicle (8).

14. Device for controlling the transportation of objects (3) that are provided with machine-readable ID codes to specified distribution points with the aid of a transport vehicle (8),
wherein
- the transport vehicle (8) has at least one rack module (2) for accommodating the objects (3),
- the device has a reading device (4) for reading the ID codes and
- the device includes a determination unit that is embodied to determine, using the ID codes that have been read, which object is to be unloaded at which distribution point,
wherein the rack module (2) has a plurality of levels for accommodating the objects (3),
when the objects (3) are moved relative to the reading device (4) the reading device (4) is embodied for automatically
- reading the respective ID code of an object conducted past the reading device (4) and
- determining on which rack level said object is located, **characterised in that**
the determination unit includes an evaluation unit which is embodied for automatically determining
for each distribution point the position in the rack module (2) of each object that is to be unloaded at said distribution point as a function of
- the order in which the ID code is read and
- the determined rack level on which the object is located,
and the reading device (4) is provided for the purpose of writing the position of each object in the rack module (2) to a contactlessly readable data memory mounted on the rack module (2) and the transport vehicle (8) is provided for the purpose of reading out said data from the data memory again when the rack module (2) is pushed into the transport vehicle (8).

15. Device according to claim 14,
**characterised in that**
the device additionally includes a display device (9) for displaying the positions at which the objects (3) that are to be unloaded at the corresponding distribution points are located in the rack module (2).

16. Device according to claim 15,
**characterised in that**
the display device (9) is embodied as a portable device.

17. Device according to claim 15 or claim 16,
**characterised in that**
the device comprises an electronic data memory in which
- an image and/or a dimension of at least one of the objects (3) and
- an assignment of said image and/or dimension to the ID
code of said object
are stored and
the display device (9) is embodied to display the image and/or the dimension together with the position of said object in the rack module (2).

18. Device according to one of claims 14 to 17,
**characterised in that**
the ID codes are stored in contactlessly readable data memories (6)
and the data memories are located in or on the objects (3).

19. Device according to claim 18,
**characterised in that**
also stored in each data memory (6) of an object in addition to the ID codes is the distribution point at which said object is to be unloaded from the transport vehicle (8) .

20. Device according to claim 18 or claim 19,
**characterised in that**
at least one contactlessly readable data memory is embodied as an RFID tag (6).

21. Device according to one of claims 18 to 20,
**characterised in that**
at least one contactlessly readable data memory of an object is embodied as a barcode which encodes the ID code of the object and is attached to a surface of the object and
the reading device (4) is embodied to read a barcode.

22. Device according to one of claims 14 to 21,
**characterised in that**
the reading device (4) is embodied as a stationary device and the rack module (2) as a movable device.

23. Device according to one of claims 14 to 22,
**characterised in that**
the reading device (4) comprises a plurality of detection units,
each detection unit is assigned to one rack level in each case and
the reading device (4) is embodied to establish, during the determination of the rack level on which an object is located, which detection unit has read the ID code of said object.

24. Device according to claim 23,
**characterised in that**
each detection unit includes a transmitting and receiving unit and
each transmitting and receiving unit is screened from the other transmitting and receiving units in such a way that it is able to read only ID codes of objects on the rack level assigned to it.

25. Device according to claim 24,
**characterised in that**
each transmitting and receiving unit includes an RFID antenna.

26. Device according to claim 25,
**characterised in that**
each rack level has a rack floor and the screening of the transmitting and receiving units includes a screening of the rack floors.

27. Device according to one of claims 14 to 26,
**characterised in that**
the determination unit
- has read access to a data memory in which a computer-accessible assignment of the ID code of said object to one of the distribution points in each case is stored for each object and
- is embodied to determine, using the ID codes that have been read and the assignments, which object is to be unloaded at which distribution point.

28. Device according to one of claims 14 to 27,
**characterised in that**
the device includes a GPS navigation module in which a distribution route containing the distribution points is stored and
which is embodied, upon a distribution point being reached, to activate the determination and/or display of the positions of the objects (3) that are to be unloaded at said distribution point.

29. Device according to one of claims 14 to 28,
**characterised in that**
the objects (3) are transported using a plurality of rack modules (2),
each rack module (2) has a machine-readable rack module ID code (7) in each case,
the reading device (4) is embodied
- to read the rack module ID code (7) of said rack module (2) automatically in addition when the objects (3) are moved relative to the reading device (4) and
- to determine in addition, for each distribution point and for each object that is to be unloaded at the distribution point, in which rack module (2) said object (3) is located.

30. Device according to claim 29,
**characterised in that**
each machine-readable rack module ID code of a rack module (2) is stored in a contactlessly readable data memory (7) in each case.

## Revendications

1. Procédé de transport d'objets ( 3 ) qui sont munis de caractéristiques pouvant être lues par machine à des points de distribution prescrits à l'aide d'un véhicule ( 8 ) de transport,
dans lequel
- le véhicule ( 8 ) de transport a au moins un module ( 2 ) de rayonnage pour la réception des objets ( 3 ),
- on charge le module ( 2 ) de rayonnage des objets,
- on lit automatiquement les caractéristiques,
- on fait passer le véhicule ( 8 ) de transport ayant le module ( 2 ) de rayonnage au point de distribution, et
- en utilisant les caractéristiques lues, on détermine quel objet doit être transporté à quel point de distribution et doit y être déchargé du véhicule ( 8 ) de transport,
dans lequel le module ( 2 ) de rayonnage a plusieurs plans de réception des objets ( 3 ),
on déplace le module ( 2 ) de rayonnage chargé des objets ( 3 ) par rapport à un dispositif ( 4 ) de lecture,
le dispositif ( 4 ) de lecture lors du déplacement des objets ( 3 ) automatiquement
- lit la caractéristique respective d'un objet passant devant le dispositif ( 4 ) de lecture et
- détermine dans quel plan de rayonnage se trouve cet objet, **caractérisé en ce que**, pour chaque point de distribution, on détermine automatiquement la position de chaque objet qui doit être déchargé en ce point de distribution dans le module ( 2 ) de rayonnage en fonction de
- la succession de la lecture de la caractéristique et
- le plan de rayonnage déterminé dans lequel se trouve l'objet et
on écrit la position de chaque objet dans le module ( 2 ) de rayonnage par le dispositif ( 4 ) de lecture sur une mémoire de données pouvant être lue sans contacte et mise sur le module ( 2 ) de rayonnage et on relit ces données sur le véhicule ( 8 ) de transport dans la mémoire de données lorsque le module ( 2 ) de rayonnage est déplacé dans le véhicule ( 8 ) de transport.

2. Procédé suivant la revendication 1,
**caractérisé en ce que** l'on indique dans le module ( 2 ) de rayonnage les positions des objets ( 3 ) à décharger aux points de distribution respectifs.

3. Procédé suivant la revendication 2,
**caractérisé en ce que** l'on indique les positions sur un appareil portatif.

4. Procédé suivant la revendication 2 ou la revendication 3,
**caractérisé en ce que**
on mémorise électroniquement
- une reproduction et/ou une dimension d'un objet ( 3 ) et,
- une affectation de cette reproduction et/ou de cette dimension pour la caractérisation de cette objet et
- on indique dans le module ( 2 ) de rayonnage la reproduction et/ou la dimension ensemble avec la position de cet objet.

5. Procédé suivant l'une des revendications précédentes,
**caractérisé en ce que** l'on déplace le module ( 2 ) de rayonnage chargé des objets ( 3 ) par rapport au dispositif ( 4 ) de lecture, en faisant passer le module ( 2 ) de rayonnage devant le dispositif ( 4 ) de lecture.

6. Procédé suivant l'une des revendications précédentes,
**caractérisé en ce que** le dispositif ( 4 ) de lecture comprend plusieurs unités de détection,
chaque unité de détection est affectée respectivement à un plan de rayonnage et
déterminer dans quel plan de rayonnage se trouve un objet comprend le stade de constatation de l'unité de détection qui a lu la caractéristique de cet objet.

7. Procédé suivant l'une des revendications précédentes,
**caractérisé en ce que** l'on mémorise les caractéristiques dans des mémoires de données qui se trouvent dans ou sur les objets ( 3 ), et le dispositif ( 4 ) de lecture lit les caractéristiques sans contact.

8. Procédé suivant la revendication 7,
**caractérisé en ce que** l'on dirige les objets ( 3 ) lors du chargement de manière à ce que le dispositif ( 4 ) de lecture puisse lire la mémoire des données lors du déplacement des objets ( 3 ).

9. Procédé suivant la revendication 7 ou 8,
**caractérisé en ce que** l'on mémorise dans chaque mémoire de données d'un objet, outre les caractéristiques, supplémentairement le point de distribution où cet objet doit être déchargé du véhicule ( 8 ) de transport.

10. Procédé suivant l'une des revendications précédentes,
**caractérisé en ce que** l'on détermine automatiquement pour chaque objet, en utilisant la lecture de la caractéristique de cet objet et en utilisant une affectation prescrite disponible sur ordinateur de cette caractéristique à l'un des points de distribution, le point de distribution où cet objet ( 3 ) doit être déchargé.

11. Procédé suivant l'une des revendications précédentes,
**caractérisé en ce que** l'on active au point de distribution respectif le déchargement et/ou l'indication des positions des objets à décharger, en utilisant un module de navigation GPS, dans lequel un itinéraire de distribution ayant les points de distribution est mémorisé.

12. Procédé suivant l'une des revendications précédentes,
**caractérisé en ce que** on transporte les objets ( 3 ) en utilisant plusieurs modules ( 2 ) de rayonnage,
chaque module ( 2 ) de rayonnage a respectivement une caractéristique ( 7 ) de module de rayonnage pouvant être lue par machine,
on déplace chaque module ( 2 ) de rayonnage par rapport au dispositif ( 4 ) de lecture et
le dispositif ( 4 ) de lecture lit, lors du déplacement de chaque module ( 2 ) de rayonnage, supplémentairement la caractéristique ( 7 ) de ce module ( 2 ) de rayonnage et
pour chaque point de distribution et pour chaque objet qui doit être déchargé au point de distribution, on détermine supplémentairement le module de rayonnage dans lequel se trouve cet objet.

13. Procédé suivant l'une des revendications précédentes,
**caractérisé en ce que** l'on charge le ou les modules ( 2 ) de rayonnage à l'extérieur du véhicule ( 8 ) de livraison et on les transporte ensuite dans le véhicule ( 8 ) de livraison.

14. Dispositif pour commander le transport d'objets ( 3 ) qui sont munis de caractéristiques pouvant être lues par machine à des points de distribution prescrits à l'aide d'un véhicule ( 8 ) de transport,
dans lequel
- le dispositif ( 8 ) de transport a au moins un module
( 2 ) de rayonnage pour la réception des objets ( 3 ),
- le dispositif a un dispositif ( 4 ) de lecture des caractéristiques,
- le dispositif comprend une unité de détermination qui est telle qu'en utilisant la lecture des caractéristiques, elle détermine quel objet doit être déchargé à quel point de distribution,
dans lequel le module ( 2 ) de rayonnage a plusieurs plans de réception des objets ( 3 ),
le dispositif ( 4 ) de lecture est tel que, lors d'un déplacement des objets ( 3 ) par rapport au dispositif ( 4 ) de lecture automatiquement,
- il lit la caractéristique respective d'un objet passant devant le dispositif ( 4 ) de lecture et,
- il détermine le plan de rayonnage dans lequel se trouve
cet objet,
**caractérisé en ce que**
une unité de détermination comprend une unité d'exploitation qui est telle qu'il est déterminé automatiquement, pour chaque point de distribution, la position de chaque objet à décharger en ce point de distribution dans le module ( 2 ) de rayonnage en fonction de
- la succession de la lecture de la caractéristique et,
- le plan de rayonnage déterminé dans lequel se trouve l'objet,
et le dispositif ( 4 ) de lecture est prévu pour écrire la position de chaque objet dans le module ( 2 ) de rayonnage sur une mémoire de données pouvant être lue sans contact et mise sur le module ( 2 ) de rayonnage et le véhicule ( 8 ) de transport est prévu pour lire à nouveau ces données dans la mémoire de données, lorsque le module ( 2 ) de rayonnage est déplacé dans le véhicule ( 8 ) de transport.

15. Dispositif suivant la revendication 14,
**caractérisé en ce que** le dispositif comprend supplémentairement dans le module ( 2 ) de rayonnage un dispositif ( 9 ) d'indication pour indiquer les positions des objets ( 3 ) à décharger aux points de distribution correspondants.

16. Dispositif suivant la revendication 15,
**caractérisé en ce que** le dispositif ( 9 ) d'indication est conformé en appareil portatif.

17. Dispositif suivant la revendication 15 ou la revendication 16,
**caractérisé en ce que** le dispositif comprend une mémoire électronique de données dans laquelle sont mémorisées
- une reproduction et/ou une dimension d'au moins l'un des objets ( 3 ) et
- une affectation de cette reproduction et/ou de cette dimension à la caractéristique de cet objet, et
le dispositif ( 9 ) d'indication est tel que la reproduction et/ou la dimension sont indiquées conjointement avec la position de cet objet dans le module ( 2 ) de rayonnage.

18. Dispositif suivant l'une des revendications 14 à 17, **caractérisé en ce que**
les caractéristiques sont mémorisées dans des mémoires ( 6 ) de données pouvant être lues sans contact
et les mémoires de données se trouvent dans ou sur les objets ( 3 ) .

19. Dispositif suivant la revendication 18,
**caractérisé en ce qu'**il est mémorisé dans chaque mémoire de données d'un objet, outre les caractéristiques supplémentairement le point de distribution où cet objet doit être déchargé du véhicule ( 8 ) de transport.

20. Dispositif suivant la revendication 18 ou 19,
**caractérisé en ce qu'**au moins une mémoire de données, pouvant être lue sans contact, est constituée sous la forme d'une étiquette RFID ( 6 ).

21. Dispositif suivant l'une des revendications 18 à 20,
**caractérisé en ce qu'**au moins une mémoire une données d'un objet, pouvant être lue sans contact, est constituée sous la forme d'un code barre qui code la caractéristique de l'objet et qui est mis sur une surface de l'objet et le dispositif ( 4 ) de lecture est tel qu'il lit un code barre.

22. Dispositif suivant l'une des revendications 14 à 21,
**caractérisé en ce que** le dispositif ( 4 ) de lecture est un appareil à poste fixe et le module ( 2 ) de rayonnage est constitué sous la forme d'un appareil mobile.

23. Dispositif suivant l'une des revendications 14 à 22,
**caractérisé en ce que**
le dispositif ( 4 ) de lecture comprend plusieurs unités de détection,
chaque unité de détection est affectée respectivement à un plan de rayonnage et
le dispositif ( 4 ) de lecture est tel que, lors de la détermination du plan de rayonnage dans lequel se trouve un objet, il constate l'unité de détection, qui a lu la caractéristique de cet objet.

24. Dispositif suivant la revendication 23,
**caractérisé en ce que** chaque unité de détection comprend une unité d'émission et une unité de réception et
chaque unité d'émission et chaque unité de réception est protégée vis-à-vis des autres unités d'émission et de réception de manière à pouvoir lire exclusivement des caractéristiques d'objets dans le plan de rayonnage qui lui est affecté.

25. Dispositif suivant la revendication 24,
**caractérisé en ce que** chaque unité d'émission et chaque unité de réception comprend une antenne RFID.

26. Dispositif suivant la revendication 25,
**caractérisé en ce que** chaque plan de rayonnage a respectivement un fond de rayonnage et la protection des unités d'émission et des unités de réception a une protection des fonds de rayonnage.

27. Dispositif suivant l'une des revendications 14 à 26,
**caractérisé en ce que** l'unité de détermination
- a un accès en lecture à une mémoire de données dans laquelle il est mémorisé pour chaque objet une affectation disponible sur ordinateur de la caractéristique de cet objet à respectivement l'un des points de distribution, et
- est conformée de manière, en utilisant la lecture des caractéristiques et les affectations, à déterminer quel objet doit être déchargé en quel point de distribution.

28. Dispositif suivant l'une des revendications 14 à 27,
**caractérisé en ce que** le dispositif comprend un module de navigation GPS dans lequel un itinéraire de distribution ayant les points de distribution est mémorisé et
qui est conformé pour, lorsqu'un point de distribution est atteint, activer la détermination et/ou l'indication des positions des objets ( 3 ) à décharger en ce point de distribution.

29. Dispositif suivant l'une des revendications 14 à 28,
**caractérisé en ce que** les objets sont transportés en utilisant plusieurs modules ( 2 ) de rayonnage,
chaque module ( 2 ) de rayonnage a respectivement une caractéristique ( 7 ) de module de rayonnage pouvant être lue par machine,
Le dispositif ( 4 ) de lecture est conformé,
- pour lire, lors d'un déplacement des objets ( 3 ) par rapport au dispositif ( 4 ) de lecture, supplémentairement automatiquement la caractéristique ( 7 ) de ce module ( 2 ) de rayonnage et,
- pour chaque point de distribution et pour chaque objet qui doit être déchargé au point de distribution, déterminer supplémentairement dans quel module ( 2 ) de rayonnage se trouve cet objet ( 3 ).

30. Dispositif suivant la revendication 29,
**caractérisé en ce que** chaque caractéristique d'un module ( 2 ) de rayonnage, pouvant être lue par machine, est mémorisée dans respectivement une mémoire ( 7 ) de données pouvant être lue sans contact.
